# EUROPEAN PATENT SPECIFICATION

(11) **EP 3 194 252 B1**
(45) Date of publication and mention of the grant of the patent: **21.11.2018**
(21) Application number: 15800951.4
(22) Date of filing: 16.09.2015
(51) Int. Cl.: B62D 25/20, B62D 33/02, B60R 13/01

(54) **A CONVEYOR FLOOR AND A METHOD FOR APPLYING SUCH A CONVEYOR FLOOR.**
FÖRDERBODEN UND VERFAHREN ZUR ANWENDUNG SOLCH EINES FÖRDERBODENS
PLANCHER DE TRANSPORTEUR ET PROCÉDÉ D'APPLICATION DUDIT PLANCHER DE TRANSPORTEUR

(30) Priority: 17.09.2014 BE 201400700
(43) Date of publication of application: 26.07.2017
(73) Proprietor: MV Trading Bvba, 3583 Beringen (BE)
(72) Inventor: VERCAMMEN, Marc, B-3460 Assent (BE)
(74) Representative: Van hunsel, Lieven M.S.
(86) International application number: PCT/IB2015/057115
(87) International publication number: WO 2016/046694

(56) References cited:
- JP-B1- 4 823 382
- US-A- 2 522 138
- US-A- 4 339 506
- US-A1- 2005 136 221

## Description

The present invention concerns a conveyor floor, in particular a conveyor floor of a semitrailer, freight wagon or another similar means of transport having usually a mainly wooden floor construction. A conveyor floor is also known as a load floor. When loading lorries, semitrailers and the like, the loads need to be anchored in order to prevent shifting during transport. A sudden shifting of the load in a certain direction causes great instability of the vehicle, implying dangers such as the tilting of the vehicle. In order to prevent this, load floors are provided with antiskid treatments.
Another problem is decay of the loading floors over time, caused by water or other products, such as also chemical corrosion for example.
Existing professional load floors are provided to that end with an (antiskid) coating which is pressed for example onto hardwood veneer plates. A disadvantage is that this coating is easily damaged when a load falls on the plates, as a result of which the plates will be no longer protected against moisture and other substances and will thus start to decay faster in these places. Other coatings include polymer composites in combination with corundum. However, a disadvantage is that the coating is stronger than the floor, and the floor will usually break down sooner than the coating.
A known conveyor floor is described in US 6.318.794. This conveyor floor has a composed wooden core with a flat top surface and bottom surface, and a reinforced composite layer at the bottom which increases the bending resistance. To this end, the reinforced composite layer is resistant to tensile loads and preferably comprises several reinforcement elements, for example glass fibre strands or a glass fabric embedded in an adhesive matrix such as a synthetic rubber.
The entire panel which is thus obtained, and as a result also the top surface which is directed to the loads, is coated with an outer coating or coating such a s polyurethanes and the like, possibly provided with a UV-inhibitor and a granular material serving as anti-skid. It is clear that this floor construction seeks to reinforce the bottom side in order to prevent it from bending, and at the same time to preserve the panels by also providing a coating at the top.

US 2005/136221 A1 describes a method and device for protecting the loading space of a vehicle. This document describes a conveyor floor consisting of floor elements, wherein the floor elements are provided with a layer on the side which is situated on top when in use, and on top of that a first cover layer, and on top of that a second cover layer. The method comprises the steps of providing two different types of polymer coatings, whereby the first polymer composition provides for a relatively hard layer and the second one provides for a relatively soft layer.
As polymers are cited among others polyurethane, polyurea or a polyurethane/polyurea hybrid polymer.
The hardness on the Shore D-scale of the first or bottom layer is 50-80. The top layer is made of a softer material, for example with a hardness on the Shore D scale of 35-49.

The motive for this construction is that the soft layer provides for the enhanced anti-skid properties, and the hard underlying layer prevents any penetration by sharp objects. This floor construction is mainly designed to protect the loading space of a pickup truck.

Providing such a harder underlayer on a wooden core would be pointless since perforation of the wooden core as a restricted disadvantage does not outweigh the reduced anti-skid properties resulting from a hard underlayer.

The present invention aims to remedy one or several of the above-mentioned and/or other disadvantages, and in particular to provide a conveyor floor with anti-skid properties and nevertheless allow the loads to shift during the loading and unloading and thereby restrict or even prevent any damage or wear, given that the shifting of the loads during the loading and unloading is unavoidable in practice.

To this end, the invention concerns a device for the transport of goods, comprising a conveyor floor consisting of floor elements whereby the floor elements are provided with a rubber layer on the side which is situated on top while in use, having on top of that at least a first cover layer or a so-called rigid coating whose material has an elongation at break of between 200% and 400%, and directly or indirectly on top of that at least one second cover layer or a so-called anti-skid coating whose material has an elongation at break of between 600% and 800%.

A loading floor for lorries or semitrailers is typically made of wooden floor boards such as for example tropical hardwood or plywood, or a composition thereof.

The floor elements in the floor construction according to the invention may consist of conventional floor boards, but also of steel plates or the like.

Indeed, steel is usually not used as a material for a conveyor floor because the goods would slide too much. Wooden boards have higher anti-skid properties. Given the present invention, the use of steel or other metals and also plastics or composite materials becomes technically and economically feasible.

The floor elements may also be formed as a plate then, for example.

The hardness on the Shore D-scale of the rubber layer is preferably smaller than 50, and more preferably smaller than 45.

A major advantage consists in that the loading floor has anti-skid properties which prevent the loads from shifting during transport.

The aforesaid construction of the elastically compressible carrier on which at least two cover layers or coatings are provided, results in a floor which has a significant resistance to damage.

By providing at least two cover layers or coatings on the elastic carrier which is made of rubber here, although this is not strictly necessary, characterised by an increasing elongation at break depending on whether the cover layer or coating is removed further away from the elastic carrier, the rubber layer is prevented from tearing too quickly when a pallet or another load is shifted on a thus finished anti-skid floor.

Another advantage is the damping capacity of the rubber layer. The combination of both effects makes for an ideal loading floor. Yet another advantage is the water resistance and chemical protection of the loading floor. These effects guarantee improved sustainability of the loading floor and prevent wear. This results in a longer lifespan of the loading and a transport made safer as such.

The rubber layer protects the floor elements against damage and provides for acoustic insulation during transport. Due to the weight of the load, the rubber layer is compressed to a certain degree, as a result of which the load will engage in the rubber layer and any shifting is prevented. Moreover, the elongation of the coating provides for an additional resistance to the shifting of the load on the floor.

In a preferred embodiment, the rubber layer has a grain structure with a grain size of 0.07 to 12 mm, and preferably between 0.08 and 2 mm, and more preferably still between 0.1 and 0.3 mm. Indeed, by using a rubber layer with a small grain size, the empty gaps as well as the consumption of coating is restricted.

The thickness of the rubber layer preferably amounts to 3 to 7 mm, preferably 4 to 5 mm. A rubber layer which is too thin offers too little compression and damping, whereas a rubber layer which is too thick makes it difficult to move a pallet truck.
Thanks to the granular aspect of the rubber layer, the coating is distributed even better between the grains and in this way provides for a uniform, continuous sealing.

The rubber layer is preferably glued on the floor elements. The rubber layer preferably has the shape of a granular rubber mat.

Both cover layers, i.e. the first cover layer or the so-called rigid coating and the second cover layer or so-called anti-skid coating, preferably consist of a polyurea coating with an elongation at break of 200% to 400% for the first cover layer, and an elongation at break of 600% to 800% for the second cover layer.

The different cover layers, in this case the two cover layers, are preferably provided as atomized, i.e. as a spray which is sprayed onto the rubber layer, preferably with a thickness of 0.8 mm to 1.5 mm for the first cover layer or so-called rigid coating, and with a thickness of 1.5 to 3 mm for the second cover layer or so-called anti-skid coating.

The coating also includes properties of water sealing and chemical protection.

The present invention further concerns a method for improving the sustainability of floor elements, consisting of the following steps: optional sandblasting or cleaning of the floor elements, applying a rubber layer on the floor elements, preferably by means of gluing, and applying a first cover layer or so-called rigid coating whose material has an elongation at break of between 200% and 400%, and directly or indirectly on top of that at least one second cover layer or so-called anti-skid coating whose material has an elongation at break of between 600% and 800%.

In order to better explain the characteristics of the invention, the following preferred embodiment of a device according to the invention is described by way of example only without being limitative in any way, with reference to the accompanying drawings, in which:

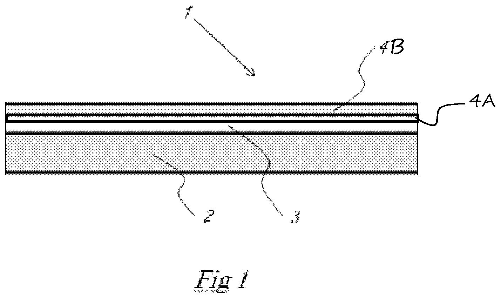

figure 1 shows a preferred embodiment of a device according to the invention for the transport of goods.

The device as represented in figure 1 comprises a conveyor floor 1 consisting of floor elements 2, in this case floor boards 2. The floor elements 2 have been preserved by applying a rubber layer 3 on top of the floor elements. The rubber layer 3 is treated with a first cover layer or so-called rigid coating 4A whose material has an elongation at break of between 200% and 400%, and in this case, although this is not strictly necessary, a second cover layer or so-called anti-skid coating 4B directly on top of the latter, whose material has an elongation at break of between 600% and 800%.

The anti-skid coating 4B is also water-resistant and chemically resistant in this case.

It is clear that the floor elements 2 may also be made of steel, plastic or a composite material or the like, and that various shapes are possible.

The present invention is by no means restricted to the embodiment described by way of example and represented in the accompanying figure. On the contrary, such a conveyor floor and method applying to such a conveyor floor according to the invention can be made in all sorts of shapes and dimensions while still remaining within the scope of the invention, as defined by the appended claims.

## Claims

1. Conveyor floor (1) consisting of floor elements (2), wherein the floor elements (2) are provided with a rubber layer (3) on the side which is situated on top when in use, and on top of that at least a first cover layer or so-called rigid coating (4A) whose material has an elongation at break of between 200% and 400%, and directly or indirectly on top of that at least one second cover layer or so-called anti-skid coating (4B) whose material has an elongation at break of between 600% and 800%.

2. Conveyor floor according to claim 1, **characterised in that** the rubber layer (3) has a grain structure with a granular size of 0.07 to 12 mm, and preferably 0.08 to 2 mm, and better still 0.1 to 0.3 mm.

3. Conveyor floor according to the preceding claim, **characterised in that** between the rubber layer (3) and the floor elements (2) is provided a layer of glue, whereby the rubber layer (3) is preferably made in the shape of a granular rubber mat.

4. Conveyor floor according to claims 1, 2 or 3, **characterised in that** the rubber layer (3) has a thickness of 3 to 7 mm, **in that** the first cover layer or so-called rigid coating (4A) has a thickness of 0.8 mm to 1.5 mm, and **in that** the second cover layer or so-called anti-skid coating (4B) has a thickness of 1.5 to 3 mm.

5. Conveyor floor according to claim 1, **characterised in that** the first cover layer or so-called rigid coating (4A) and/or the second cover layer or so-called anti-skid coating (4B) mainly consists of a polyurea coating.

6. Conveyor floor according to the preceding claim, **characterised in that** the first cover layer or so-called rigid coating (4A) is formed of a spray which has been sprayed on the rubber layer, preferably with a thickness of 0.8 to 1.5 mm.

7. Conveyor floor according to the preceding claim, **characterised in that** the second cover layer or so-called anti-skid coating (4B) is formed of a spray which is sprayed on the first cover layer or so-called rigid coating, or on another intermediate layer, preferably with a thickness of 2.5 to 3 mm.

8. Method for improving the sustainability of the floor elements (2) of a conveyor floor, comprising the following steps:
a. applying a rubber layer (3) on the floor elements by means of gluing, and
b. applying a first cover layer or so-called rigid coating (4A) whose material has an elongation at break of between 200% and 400%, and directly or indirectly on top of the latter at least one second cover layer or so-called anti-skid coating (4B) whose material has an elongation at break of between 600% and 800%.

9. Method according to claim 8, **characterised in that** before the rubber layer (3) and the cover layers (4A,4B) are applied, the floor elements (2) are sandblasted and/or cleaned.

## Patentansprüche

1. Ladeboden (1), bestehend aus Bodenelementen (2), wobei die Bodenelemente (2) an der sich im Gebrauch oben befindenden Seite mit einer Gummischicht (3) versehen sind, und darauf mindestens einer ersten Deckschicht oder sogenannten steifen Beschichtung (4A), deren Material eine Bruchdehnung von zwischen 200% und 400% aufweist, und direkt oder indirekt darauf mindestens einer zweiten Deckschicht oder sogenannten rutschhemmenden Beschichtung (4B), deren Material eine Bruchdehnung von zwischen 600% und 800% aufweist.

2. Ladeboden nach Anspruch 1, **dadurch gekennzeichnet, dass** die Gummischicht (3) eine Kornstruktur mit einer Korngröße von 0,07 bis 12 mm und bevorzugt 0,08 bis 2 mm und noch besser 0, 1 bis 0,3 mm aufweist.

3. Ladeboden nach dem vorhergehenden Anspruch, **dadurch gekennzeichnet, dass** zwischen der Gummischicht (3) und den Bodenelementen (2) eine Leimschicht vorgesehen ist, wobei die Gummischicht (3) bevorzugt in Form einer körnigen Gummimatte ausgeführt ist.

4. Ladeboden nach Ansprüchen 1, 2 oder 3, **dadurch gekennzeichnet, dass** die Gummischicht (3) eine Dicke von 3 bis 7 mm aufweist, dass die erste Deckschicht oder sogenannte steife Beschichtung (4A) eine Dicke von 0,8 mm bis 1,5 mm aufweist, und dass die zweite Deckschicht oder sogenannte rutschhemmende Beschichtung (4B) eine Dicke von 1,5 bis 3 mm aufweist.

5. Ladeboden nach Anspruch 1, **dadurch gekennzeichnet, dass** die erste Deckschicht oder sogenannte steife Beschichtung (4A) und/oder die zweite Deckschicht oder sogenannte rutschhemmende Beschichtung (4B) hauptsächlich aus einer Polyureabeschichtung besteht.

6. Ladeboden nach dem vorhergehenden Anspruch, **dadurch gekennzeichnet, dass** die erste Deckschicht oder sogenannte steife Beschichtung (4A) aus einem Spray besteht, das auf die Gummischicht gesprüht worden ist, bevorzugt mit einer Dicke von 0,8 bis 1,5 mm.

7. Ladeboden nach dem vorhergehenden Anspruch, **dadurch gekennzeichnet, dass** die zweite Deckschicht oder sogenannte rutschhemmende Beschichtung (4B) aus einem Spray besteht, das auf die erste Deckschicht oder sogenannte steife Beschichtung oder auf eine andere Zwischenschicht gesprüht wird, bevorzugt mit einer Dicke von 2,5 bis 3 mm.

8. Verfahren zur Verbesserung der Nachhaltigkeit der Fußbodenelemente (2) eines Ladebodens, umfassend die folgenden Schritte:
a. Anbringen einer Gummischicht (3) auf den Bodenelementen mittels Verleimen, und
b. Anbringen einer ersten Deckschicht oder sogenannten steifen Beschichtung (4A), deren Material eine Bruchdehnung von zwischen 200% und 400% aufweist, und direkt oder indirekt oben auf letzterer mindestens einer zweiten Deckschicht oder sogenannten rutschhemmenden Beschichtung (4B), deren Material eine Bruchdehnung von zwischen 600% und 800% aufweist.

9. Verfahren nach Anspruch 8, **dadurch gekennzeichnet, dass**, bevor die Gummischicht (3) und die Deckschichten (4A, 4B) angebracht werden, die Bodenelemente (2) sandgestrahlt und/oder gereinigt werden.

## Revendications

1. Plancher de transporteur (1) constitué par les éléments de plancher (2) ; dans lequel les éléments de plancher (2) sont munis d'une couche de caoutchouc (3) sur le côté qui est situé au sommet lors de leur utilisation, et par-dessus cette couche, au moins une première couche de revêtement ou ce qu'il est convenu d'appeler un revêtement rigide (4A) dont la matière possède un allongement à la rupture entre 200 % et 400 %, et de manière directe ou de manière indirecte par dessus ledit revêtement, au moins une seconde couche de revêtement ou ce qu'il est convenu d'appeler un revêtement antiglissement (4B) dont la matière possède un allongement à la rupture entre 600 % et 800 %.

2. Plancher de transporteur selon la revendication 1, **caractérisé en ce que** la couche de caoutchouc (3) possède une structure de grain possédant une granulométrie de 0,07 à 12 mm, et de préférence de 0,08 à 2 mm, et encore mieux de 0,1 à 0,3 mm.

3. Plancher de transporteur selon la revendication précédente, **caractérisé en ce que**, entre la couche de caoutchouc (3) et les éléments de plancher (2), on prévoit une couche de colle ; dans lequel la couche de caoutchouc (3) est de préférence réalisée sous la forme d'un mat granulaire en caoutchouc.

4. Plancher de transporteur selon la revendication 1, 2 ou 3, **caractérisé en ce que** la couche de caoutchouc (3) possède une épaisseur de 3 à 7 mm ; **en ce que** la première couche de revêtement ou ce qu'il est convenu d'appeler le revêtement rigide (4A) possède une épaisseur de 0,8 mm à 1,5 mm ; et **en ce que** la seconde couche de revêtement ou ce qu'il est convenu d'appeler le revêtement antiglissement (4B) possède une épaisseur de 1,5 à 3 mm.

5. Plancher de transporteur selon la revendication 1, **caractérisé en ce que** la première couche de revêtement ou ce qu'il est convenu d'appeler le revêtement rigide (4A) et/ou la seconde couche de revêtement ou ce qu'il est convenu d'appeler le revêtement antiglissement (4B) sont constitués à titre principal d'un revêtement à base de polyurée.

6. Plancher de transporteur selon la revendication précédente, **caractérisé en ce que** la première couche de revêtement ou ce qu'il est convenu d'appeler le revêtement rigide (4A) est formé à partir d'un spray qui a été pulvérisé sur la couche de caoutchouc, de préférence avec une épaisseur de 0,8 à 1,5 mm.

7. Plancher de transporteur selon la revendication précédente, **caractérisé en ce que** la seconde couche de revêtement ou ce qu'il est convenu d'appeler le revêtement antiglissement (4B) est formé à partir d'un spray qui a été pulvérisé sur la première couche de revêtement ou ce qu'il est convenu d'appeler le revêtement rigide ou sur une autre couche intermédiaire, de préférence avec une épaisseur de 2,5 à 3 mm.

8. Procédé pour améliorer la durabilité des éléments de plancher (2) d'un plancher de transporteur, comprenant les étapes suivantes dans lesquelles :
a. on applique une couche de caoutchouc (3) sur les éléments de plancher en utilisant de la colle ; et
b. on applique une première couche de revêtement ou ce qu'il est convenu d'appeler un revêtement rigide (4A) dont la matière possède un allongement à la rupture entre 200 % et 400 %, et de manière directe ou de manière indirecte par dessus ledit revêtement, au moins une seconde couche de revêtement ou ce qu'il est convenu d'appeler un revêtement antiglissement (4B) dont la matière possède un allongement à la rupture entre 600 % et 800 %.

9. Procédé selon la revendication 8, **caractérisé en ce que**, avant l'application de la couche de caoutchouc (3) et des couches de revêtement (4A, 4B), les éléments de plancher (2) sont soumis à un décapage au sable et/ou à un nettoyage.
